# EUROPEAN PATENT APPLICATION

(11) **EP 4 822 869 A1**
(43) Date of publication of application: **14.10.2026**
(21) Application number: 25837785.2
(22) Date of filing: 10.07.2025
(51) Int. Cl.: H01M 50/42, H01M 50/451, H01M 50/489, H01M 50/446, H01M 50/403, H01M 10/052

(54) **SEPARATOR FOR ELECTROCHEMICAL DEVICE, AND MANUFACTURING METHOD THEREOF**

(30) Priority: 10.07.2024 KR 20240091290
(71) Applicant: LG Energy Solution, Ltd., Seoul 07335 (KR)
(72) Inventor: LEE, So-Yeong, Daejeon 34122 (KR); CHOI, In-Young, Daejeon 34122 (KR); BAK, Byeong-Chan, Daejeon 34122 (KR); BAE, Kyeong-Hui, Daejeon 34122 (KR); BAE, Won-Sik, Daejeon 34122 (KR)
(74) Representative: Hoffmann Eitle
(86) International application number: PCT/KR2025/010096
(87) International publication number: WO 2026/014957

(57) **Abstract**

A separator according to the present disclosure includes a porous polymer substrate, an adhesive layer and a heat-resistant layer, and the adhesive layer includes an acrylic binder polymer having a swelling ratio of 50% or more. The separator has a small thickness and sufficient peel strength.

## Description

### TECHNICAL FIELD

The present disclosure relates to a separator for an electrochemical device and a method for manufacturing the same.

This application is based on and claims priority from Korean Patent Application No. 10-2024-0091290 filed on July 10, 2024 with the Korean Intellectual Property Office, the disclosure of which is incorporated herein in its entirety by reference.

### BACKGROUND

Recently, there is growing attention to energy storage technology. With an extended range of applications as sources of energy for mobile phones, camcorders and laptop computers as well as electric vehicles, more efforts are being made in the research and development of electrochemical devices. In this aspect, in the field of electrochemical devices attracting most attention, the development of rechargeable secondary batteries is the center of attention. More recently, in the development of secondary batteries, research and development focuses on new electrode and battery designs to improve capacity density and specific energy.

An electrochemical device includes an electrode assembly including a positive electrode and a negative electrode and a separator interposed between the positive electrode and the negative electrode, and a battery case accommodating the electrode assembly, and the separator prevents a short circuit caused by a contact between the positive electrode and the negative electrode and provides pathways for electrolyte movement between the positive electrode and the negative electrode. Accordingly, it is important that the electrode assembly structure including the positive electrode, the separator and the negative electrode in a stacked configuration is maintained after electrolyte wetting.

To improve safety of the electrochemical device, attempts have been made on the separator having a ceramic-containing heat-resistant layer on at least one surface of a porous polymer substrate. However, when the heat-resistant layer is formed with a smaller thickness to reduce the thickness of the separator, peeling occurs due to lower adhesion strength between the porous polymer substrate and the heat-resistant layer.

### DISCLOSURE

### Technical Problem

The present disclosure is directed to providing a separator with a smaller thickness and improved peel strength.

### Technical Solution

An aspect of the present disclosure provides a separator, an electrochemical device and a method for manufacturing a separator of the following embodiments.

The separator according to a first embodiment includes:
a porous polymer substrate; and a porous coating layer,
wherein the porous coating layer includes an adhesive layer located on at least one surface of the porous polymer substrate; and a heat-resistant layer located on one surface of the adhesive layer,
wherein the adhesive layer includes a first binder polymer,
wherein the heat-resistant layer includes inorganic particles and a second binder polymer,
wherein the first binder polymer includes an acrylic polymer, and
wherein a swelling ratio of the acrylic polymer is 50% or more.

According to a second embodiment, in the first embodiment,
the swelling ratio of the acrylic polymer may be 60% or more.

According to a third embodiment, in the first or second embodiment,
the swelling ratio of the acrylic polymer may be measured by Equation 1 below:
   $Swelling ratio \left(%\right) = \left\{\left({W}_{1}-{W}_{0}\right)/{W}_{0}\right\} X 100$ (Equation 1)
in the Equation 1, W₀ denotes an initial mass of a film made of the acrylic polymer when measured at 25°C, and W₁ denotes a mass of the binder polymer film measured at 25°C after the film has been put in dimethyl carbonate and stored at 60°C for 48 hours.

According to a fourth embodiment, in any one of the first to third embodiments,
the carbonate-based solvent may include the dimethyl carbonate.

According to a fifth embodiment, in any one of the first to fourth embodiments,
the acrylic polymer may be crosslinked and have a degree of crosslinking of 0.01% to 80%.

According to a sixth embodiment, in any one of the first to fifth embodiments,
the acrylic polymer may include poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(dimethylamino)ethyl acrylate copolymer, an ethyl acrylate-acrylic acid-N,N-diethylacrylamide copolymer, an ethyl acrylate-acrylic acid-2-(diethylamino)ethyl acrylate copolymer, or a mixture of two or more thereof.

According to a seventh embodiment, in any one of the first to sixth embodiments,
a peel strength between the porous polymer substrate and the porous coating layer may be 50 gf/15 mm or more.

According to an eighth embodiment, in any one of the first to seventh embodiments,
the adhesive layer may not include inorganic particles.

An electrochemical device according to a ninth embodiment includes:
a positive electrode, a negative electrode and a separator interposed between the positive electrode and the negative electrode,
wherein the separator is the separator according to any one of the first to eighth embodiments.

A method for manufacturing a separator according to a tenth embodiment includes:
preparing a porous polymer substrate;
preparing a slurry for forming an adhesive layer including a first binder polymer and a first aqueous solvent, applying the slurry for forming the adhesive layer to at least one surface of the porous polymer substrate and drying the slurry for forming the adhesive layer to form the adhesive layer; and
preparing a slurry for forming a heat-resistant layer including inorganic particles, a second binder polymer, a second aqueous solvent and an organic solvent, applying the slurry for forming the heat-resistant layer to one surface of the adhesive layer and drying the slurry for forming a heat-resistant layer to form the heat-resistant layer,
wherein the first binder polymer includes an acrylic polymer, and
wherein a swelling ratio of the acrylic polymer is 50% or more.

According to an eleventh embodiment, in the tenth embodiment,
the organic solvent may include a carbonate-based solvent.

According to a twelfth embodiment, in the tenth or eleventh embodiment,
the organic solvent may include dimethyl carbonate, diethyl carbonate, dipropyl carbonate, methylpropyl carbonate, ethylpropyl carbonate, ethylmethyl carbonate or a mixture thereof.

According to a thirteenth embodiment, in any one of the tenth to twelfth embodiments,
the second aqueous solvent and the organic solvent may be mixed at a volume ratio of 95:5 to 80:20.

### Advantageous Effects

The separator according to an aspect of the present disclosure may have a smaller thickness. In addition, the separator may have higher peel strength between the porous coating layer and the porous polymer substrate.

### BEST MODE

Hereinafter, the present disclosure will be described in detail. It should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms properly for the best explanation.

Accordingly, the embodiments described herein are provided to describe the present disclosure by way of example but not intended to be limiting, so it should be understood that other equivalents replacement and modifications could be made thereto at the time the application was filed.

It should be further understood that "include", "comprise" or "have" when used in the specification, specifies the presence of the stated elements and does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, 'A and/or B' refers to either A or B or both.

Unless stated otherwise, the temperature as used herein refers to Celsius scale of temperature, and its unit is °C.

The first aspect of the present disclosure relates to a separator.

The separator according to an aspect of the present disclosure includes:
a porous polymer substrate; and a porous coating layer,
wherein the porous coating layer includes an adhesive layer located on at least one surface of the porous polymer substrate; and a heat-resistant layer located on one surface of the adhesive layer.
wherein the adhesive layer includes a first binder polymer,
wherein the heat-resistant layer includes inorganic particles and a second binder polymer,
wherein the first binder polymer includes an acrylic polymer, and
wherein a swelling ratio of the acrylic polymer is 50% or more.

In the present disclosure, the swelling ratio may be measured by Equation 1 below:
$Swelling ratio \left(%\right) = \left\{\left({W}_{1}-{W}_{0}\right)/{W}_{0}\right\} X 100$ (Equation 1)

In the above Equation 1, W₀ denotes the initial mass of a film made of the acrylic polymer when measured at room temperature (about 25°C), and W₁ denotes the mass of the acrylic polymer film when measured at room temperature (about 25°C) after the film has been put in dimethyl carbonate and stored at 60°C for 48 hours.

The separator according to the present disclosure includes the acrylic polymer having the swelling ratio of 50% or more in the adhesive layer. That is, relative to the initial mass of the acrylic polymer before swelling, the mass after swelling may be 150% or more. When the swelling ratio is 50% or more, the acrylic polymer may be sufficiently swollen by a solvent included in a slurry for forming the heat-resistant layer. The sufficient swelling of the acrylic polymer may improve the adhesion strength between the porous polymer substrate and the heat-resistant layer.

Hereinafter, the separator according to the present disclosure will be described in detail.

The separator according to the present disclosure includes the porous coating layer on at least one surface of the porous polymer substrate. Additionally, the porous coating layer includes the adhesive layer located on at least one surface of the porous polymer substrate, and the heat-resistant layer located on one surface of the adhesive layer.

### Porous polymer substrate

In an embodiment of the present disclosure, the porous polymer substrate is not limited to a particular material and may include any separator material for electrochemical devices commonly used in the art. Non-limiting examples of polymer materials used in the porous polymer substrate may include olefin polymer, ethylene terephthalate polymer, butylene terephthalate polymer, acetal polymer, amide polymer, carbonate polymer, imide polymer, ether ether ketone polymer, ether sulfone polymer, phenylene oxide polymer, phenylene sulfide polymer or ethylene naphthalene polymer.

In addition, the porous polymer substrate may include a nonwoven fabric or a porous polymer film made of the above-described polymer material, or a laminate of two or more thereof. Specifically, the porous polymer substrate may be any one of the following a) to e).
a) a porous film formed by melting and extruding the polymer material,
b) a multilayer film made of two or more stacked layers of a) the porous film,
c) a nonwoven web produced by weaving filaments obtained by melting/spinning the polymer material;
d) a multilayer film made of two or more stacked layers of c) the nonwoven web,
e) a porous film of a multilayer structure including two or more of a) to d).

The porous polymer substrate may be manufactured by forming pores through a known method commonly used in the art, for example, a wet method using a solvent, a diluent or a pore-forming agent, or a dry method using stretching, in order to ensure high permeability and porosity from the above-described material.

In an embodiment of the present disclosure, the thickness of the porous polymer substrate is not limited to a particular range, but may be 1 µm to 100 µm, or 1 µm to 30 µm. When the thickness of the porous polymer substrate falls within the aforementioned range, it may be possible to prevent the separator from being easily damaged while the battery is in use and make it easy to ensure energy density.

Meanwhile, the average pore size and porosity of the porous polymer substrate are not limited to particular ranges and may be in the proper range for use in electrochemical devices. The average pore size may be 0.01 µm to 50 µm, or 0.1 µm to 20 µm, and the porosity may be 5% to 95%. When the pore size and porosity fall within the aforementioned ranges, it may be easy to prevent the porous polymer substrate from acting as resistance, and maintain the mechanical properties of the porous polymer substrate.

The average pore size and porosity of the porous polymer substrate may be measured by BET 6-point analysis by a nitrogen gas adsorption flow method using a scanning electron microscopic (SEM) image, a mercury porosimeter, a capillary flow porometer or a porosimetry analyzer (Bell Japan Inc, Belsorp-II mini).

### Adhesive layer

The adhesive layer according to the present disclosure includes the first binder polymer, the first binder polymer includes the acrylic polymer, and the acrylic polymer has the swelling ratio of 50% or more.

In an embodiment of the present disclosure, the swelling ratio of the acrylic polymer may be 50% or more, 60% or more, 70% or more, 80% or more, or 90% or more. In addition, the swelling ratio of the acrylic polymer may be 400% or less. When the swelling ratio of the acrylic polymer falls within the aforementioned range, the peel strength between the porous polymer substrate and the porous coating layer may be significantly improved.

In an embodiment of the present disclosure, the weight average molecular weight of the acrylic polymer may be 10,000 to 1,000,000. When the weight average molecular weight of the acrylic polymer falls within the aforementioned range, it may be possible to ensure sufficient swelling ratio.

In an embodiment of the present disclosure, the weight average molecular weight (Mw) and the number average molecular weight (Mn) of a solution containing 1g of the acrylic polymer may be measured using gel permeation chromatography (GPC: PL GPC220, Agilent Technologies) in the following conditions, and the weight average molecular weight of the acrylic polymer and the molecular weight distribution may be calculated.
Column: PLmixed B X 2,
Solvent: DMF/0.05 M LiBr (0.45 µm Filtered),
Flow rate: 1.0 mℓ/min,
Sample concentration: 4.0 mg/ml,
Injection volume: 100 µℓ,
   Column temperature: 65°C
   Detector: Waters RI Detector, Standard: PS

In an embodiment of the invention, the acrylic polymer may include poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(dimethylamino)ethyl acrylate copolymer, an ethyl acrylate-acrylic acid-N,N-diethylacrylamide copolymer, an ethyl acrylate-acrylic acid-2-(diethylamino)ethyl acrylate copolymer, or a mixture of two or more thereof, and preferably, polymethylmethacrylate.

The acrylic polymer may contain a hydrophilic functional group such as OH group, CO group, COH group and/or COOH group. When the acrylic polymer contains the hydrophilic functional group, swelling may be enhanced. In addition, the acrylic polymer may include an acrylic copolymer containing the hydrophilic functional group such as OH group, CO group, COH group and/or COOH group.

In an embodiment of the present disclosure, the first binder polymer may be non-crosslinked or crosslinked.

When the first binder polymer is crosslinked, the degree of crosslinking of the first binder polymer may be 0.01% or more, 0.1% or more, 1% or more, 5% or more, 10% or more, 15% or more, 20% or more, 25% or more, 30% or more, 35% or more, 40% or more, 45% or more, 50% or more, 55% or more, 60% or more, and may be 80% or less, 75% or less, 70% or less, 65% or less, 60% or less, 55% or less, 50% or less, 45% or less, 40% or less, 35% or less, 30% or less, or 20% or less.

The degree of crosslinking of the first binder polymer may vary depending on the properties of the binder polymer. For example, when the first binder polymer includes a small number of hydrophilic functional groups, the first binder polymer may be not crosslinked or may have a low degree of crosslinking. In addition, when the first binder polymer includes a large number of hydrophilic functional groups, the first binder polymer may have a high degree of crosslinking. That is, when the degree of crosslinking of the first binder polymer is controlled within the aforementioned range, the swelling ratio may be 50% or more.

The degree of crosslinking may be calculated as a ratio of dry weight to initial weight of a film made of the first binder polymer, wherein the dry weight refers to the remaining weight after boiling for 4 hours in a decalin solution of 135°C in accordance with ASTM D 2765.

In an embodiment of the present disclosure, the adhesive layer may include the acrylic polymer in an amount of 80 wt % or more, 85 wt% or more, 90 wt% or more, 95 wt% or more, 97 wt% or more, 98 wt% or more, or 99 wt% or more based on the total 100 wt% of the adhesive layer, and may substantially include the acrylic polymer in an amount of 100 wt%. That is, the adhesive layer may include only the acrylic polymer. However, the present disclosure is not limited thereto, and in addition to the acrylic polymer, the adhesive layer may further include a binder polymer commonly used in the art, if necessary.

In an embodiment of the present disclosure, the adhesive layer may include only the binder polymer without inorganic particles.

### Heat-resistant layer

The heat-resistant layer according to the present disclosure includes the inorganic particles and the second binder polymer.

In an embodiment of the present disclosure, the inorganic particles are not limited to a particular one and may include any electrochemically stable one. That is, the inorganic particles that may be used in the present disclosure are not limited to a particular one and may include those in which oxidation and/or reduction reaction does not occur within the operating voltage range of an electrochemical device applied (for example, 0 to 5V vs Li/Li⁺). In particular, when inorganic particles having high dielectric constant are used as the inorganic particles, they may contribute to the increased degree of dissociation of an electrolyte salt in a liquid electrolyte, for example, a lithium salt, thereby improving the ionic conductivity of the electrolyte solution.

By the above-described reasons, in an embodiment of the present disclosure, the inorganic particles may include high dielectric constant inorganic particles having the dielectric constant of 5 or more, and preferably 10 or more. Non-limiting examples of the inorganic particles having the dielectric constant of 5 or more may include BaTiO_{3,} Pb(Zr,Ti)O₃ (PZT), Pb₁₋ₓLaₓZr_{1-y}Ti_{y}O₃ (PLZT, 0<x<1, 0<y<1), Pb(Mg_{1/3}Nb_{2/3})O₃-PbTiO₃ (PMN-PT), hafnia (HfO₂), SrTiO₃, SnO₂, CeO₂, MgO, Mg(OH)₂, NiO, CaO, ZnO, ZrO₂, SiO₂, Y₂O₃, Al₂O₃, AlOOH, Al(OH)₃, SiC, TiO₂ or a mixture thereof. In addition, the inorganic particles may include inorganic particles having the ability to transport lithium ions, i.e., inorganic particles that contain lithium but do not store lithium and have a function of facilitating the movement of lithium ions. Non-limiting examples of the inorganic particles having the ability to transport lithium ions may include lithium phosphate (Li₃PO₄), lithium titanium phosphate (LiₓTi_{y}(PO₄)_{3,} 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y}-based glass (0 < x < 4, 0<y<13) such as 14Li₂O-9Al₂O₃-38TiO₂-39P₂O₅, lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w< 5) such as Li_{3.25}Ge_{0.25}P_{0.75}S_{4,} lithium nitride (LiₓN_{y}, 0<x<4, 0<y<2) such as Li₃N, SiS₂-based glass (LiₓSi_{y}S_{z}, 0<x<3, 0<y<2, 0<z<4) such as Li₃PO₄-Li₂S-SiS₂, P₂S₅-based glass (LiₓP_{y}S_{z}, 0<x<3, 0<y<3, 0<z<7) such as LiI-Li₂S-P₂S₅, or a mixture thereof.

In an embodiment of the present disclosure, the average particle size of the inorganic particles may be 0.01 µm to 1.5 µm. When the average particle size of the inorganic particles falls within the aforementioned range, it may be possible to easily form an inorganic hybrid porous layer having even thickness and optimal porosity, achieve good dispersion of the inorganic particles and provide the desired energy density.

In this instance, the average particle size of the inorganic particles refers to D₅₀ particle size, and the "D₅₀ particle size" refers to a particle size at the 50% point of the cumulative particle size distribution. The particle size may be measured using a laser diffraction method. Specifically, after a powder is dispersed in a dispersion medium and fed into a commercially available laser diffraction particle size measurement instrument (for example, Microtrac S3500), the particle size distribution is calculated by measuring a diffraction pattern difference as a function of particle size when particles pass through a laser beam. The D50 particle size may be measured by calculating a particle diameter at the 50% point of the cumulative particle size distribution in the measurement instrument.

In an embodiment of the present disclosure, the inorganic particles may be included in an amount of 60 to 95 wt%, 65 to 95 wt%, 70 to 95 wt%, or 75 to 95 wt% based on the total 100 wt% of the heat-resistant layer. When the amount of the inorganic particles falls within the aforementioned range, sufficient empty spaces may be formed between the inorganic particles, thereby ensuring the porosity of the heat-resistant layer and sufficient heat resistance performance of the separator.

In an embodiment of the present disclosure, the second binder polymer may include any binder polymer commonly used in the art. Non-limiting example of the second binder polymer may include, but not limited to, any one polymer resin selected from the group consisting of polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, polyarylate, cyanoethylpullulan, cyanoethylpolyvinylalcohol, cyanoethylcellulose, cyanoethylsucrose, pullulan and carboxyl methyl cellulose, or a mixture of two or more thereof.

In an embodiment of the present disclosure, the swelling ratio of the second binder polymer may be 30% or less, 20% or less, 10% or less, 5% or less, or 3% or less. The swelling ratio of the second binder polymer may be measured by the same method as the method for measuring the swelling ratio of the first binder polymer. When the swelling ratio of the second binder polymer falls within the aforementioned range, it may be possible to ensure stability when coating the slurry due to the low swelling ratio in the slurry. In addition, it may be possible to ensure sufficient porosity in the heat-resistant layer, thereby ensuring low resistance.

In an embodiment of the present disclosure, the heat-resistant layer may further include an additive such as a dispersant and/or a thickener. For example, the additive may include cyanoethyl polyvinylalcohol (PVA-CN), citric acid, hydroxy ethyl cellulose (HEC), hydroxy propyl cellulose (HPC), ethylhydroxy ethyl cellulose (EHEC), methyl cellulose (MC), carboxymethyl cellulose (CMC), hydroxyalkyl methyl cellulose, or a mixture of two or more thereof.

In an embodiment of the present disclosure, the thickness of the heat-resistant layer may be 0.5 µm to 10 µm, 0.5 µm to 5 µm, or 0.5 µm to 3 µm. When the thickness of the heat-resistant layer falls within the aforementioned range, the separator may have a sufficiently small thickness and the outstanding heat-resistant performance.

In an embodiment of the present disclosure, the peel strength between the porous polymer substrate and the porous coating layer may be 50 gf/15 mm or more, 60 gf/15 mm or more, 70 gf/15 mm or more, 80 gf/15 mm or more, 90 gf/15 mm or more, or 100 gf/15 mm or more. When the peel strength falls within the aforementioned range, it may be possible to preventing peeling of the separator during the manufacture and operation of a secondary battery, thereby ensuring safety of the secondary battery.

The peel strength may be measured by the following method:
Tailor the separator to a size of 15 mm X 100 mm. Attach a double-sided adhesive tape to a glass plate and adhere the surface of the porous coating layer of the as-prepared separator to the adhesive tape. Subsequently, place the end of the adhered separator on UTM equipment (LLOYD Instrument LF Plus) and measure a force required to peel off the porous coating layer from the porous polymer substrate when pulling at 180° at the speed of 300 mm/min.

The second aspect of the present disclosure relates to an electrochemical device.

The electrochemical device according to an aspect of the present disclosure includes a positive electrode, a negative electrode, and a separator interposed between the positive electrode and the negative electrode,
wherein the separator is the separator according to an aspect of the present disclosure.

In an embodiment of the present disclosure, the electrochemical device includes any device that facilitates electrochemical reaction, and specific examples may include any type of primary battery, secondary battery, fuel cell, solar cell or capacitor such as supercapacitor device. In particular, the electrochemical device may include a lithium secondary battery including a lithium metal secondary battery, a lithium ion secondary battery, a lithium polymer secondary battery, a lithium-sulfur battery, or a lithium ion polymer secondary battery.

The electrode that will be applied together with the separator for the electrochemical device of the present disclosure is not limited to a particular type, and may be manufactured such that an electrode active material layer including an electrode active material, a conductive material and a binder is bonded to an electrode current collector by a known method commonly used in the art.

Non-limiting examples of the positive electrode active material of the electrode active material may include layered compounds such as lithium cobalt composite oxide (LiCoO₂) or lithium nickel oxide (LiNiO₂), or compounds substituted with one or more transition metals; lithium manganese oxide of Chemical Formula Li₁₊ₓMn₂₋ₓO₄ (x = 0 to 0.33), LiMnO₃, LiMn₂O₃ or LiMnO₂; lithium copper oxide (Li₂CuO₂); vanadium oxide such as LiV₃O₅, LiV₃O_{4,} V₂O₅ or Cu₂V₂O₇; Ni-site type lithium nickel oxide represented by Chemical Formula LiNi₁₋ₓMₓO₂ (M = Co, Mn, Al, Cu, Fe, Mg, B or Ga, x = 0.01 to 0.3); lithium manganese composite oxide represented by Chemical Formula LiMn₂₋ₓMₓO₂ (M = Co, Ni, Fe, Cr, Zn or Ta, x = 0.01 to 0.1) or Li₂Mn₃MO₅ (M = Fe, Co, Ni, Cu or Zn); LiMn₂O₄ in which Li in Chemical Formula is partially substituted with alkaline earth metal ions; disulfide compounds; Fe₂(MoO₄)₃, but are not limited thereto.

Non-limiting examples of the negative electrode active material may include negative electrode active materials commonly used in negative electrodes of electrochemical devices, and in particular, may include lithium adsorption materials such as lithium metals or lithium alloys, carbon, petroleum cokes, activated carbon, graphite or other carbons.

Non-limiting examples of the positive electrode current collector may include a foil made of aluminum, nickel or a combination thereof, and non-limiting examples of the negative electrode current collector may include a foil made of copper, gold, nickel or copper alloy, or a combination thereof.

In an embodiment of the present disclosure, the conductive material used in the negative electrode and the positive electrode may be generally added in an amount of 1 wt% to 30 wt% based on the total weight of each active material layer. The conductive material is not limited to a particular type and may include any material having conductive properties without causing a chemical change in the corresponding battery, and for example, may include graphite such as natural graphite or artificial graphite; carbon black such as acetylene black, Ketjen black, channel black, furnace black, lamp black or thermal black; conductive fibers such as carbon fibers or metal fibers; fluorocarbons; metal powder such as aluminum or nickel powder; conductive whiskers such as zinc oxide or potassium titanate whiskers; conductive metal oxide such as titanium oxide; or conductive materials such as polyphenylene derivatives.

In an embodiment of the present disclosure, the binder polymer used in the negative electrode and the positive electrode may help to hold the active material and the conductive material together and bind to the current collector, and may be generally added in an amount of 1 wt% to 30 wt% based on the total weight of each active material layer. Examples of the binder may include polyvinylidene fluoride (PVdF), polyacrylic acid (PAA), polyvinyl alcohol, carboxymethyl cellulose (CMC), starch, hydroxypropyl cellulose, regenerated cellulose, polyvinylpyrrolidone, tetrafluoroethylene, polyethylene, polypropylene, ethylene-propylene-diene terpolymer (EPDM), sulfonated EPDM, styrenebutadiene rubber, fluororubber or their copolymers.

In an embodiment of the present disclosure, the electrochemical device includes an electrolyte solution, and the electrolyte solution may include an organic solvent and a lithium salt. In addition, the electrolyte solution may include an organic solid electrolyte or an inorganic solid electrolyte.

The organic solvent may include, for example, aprotic organic solvents such as N-methyl-2-pyrrolidone, ethylene carbonate, propylene carbonate, butylene carbonate, dimethyl carbonate, diethyl carbonate, gamma-butyrolactone, 1,2-dimethoxyethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate or ethyl propionate.

The lithium salt is a material that easily dissolves in the organic solvent, and may include, for example, LiCl, LiBr, LiI, LiClO₄, LiBF4_{,} LiB1_{0C}l1_{0,} LiPF6_{,} LiCF₃SO₃, LiCF3_{C}O2_{,} LiAsF6_{,} LiSbF6_{,} LiAlCl4_{,} CH3_{S}O3_{L}i, CF₃SO₃Li, (CF₃SO₂)₂NLi, chloroborane lithium, lower aliphatic carboxylic acid lithium, lithium tetraphenylborate or imide.

In addition, to improve the charge/discharge characteristics or flame retardancy, the electrolyte solution may further include, for example, pyridine, triethylphosphite, triethanolamine, cyclic ether, ethylenediamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol or aluminum trichloride. If necessary, a halogen-containing solvent such as carbon tetrachloride or ethylene trifluoride may be further included to provide non-flammability, and carbon dioxide gas may be further included to improve high-temperature preservation characteristics.

The organic solid electrolyte may include, for example, polyethylene derivatives, polyethylene oxide derivatives, polypropylene oxide derivatives, phosphoric acid ester polymer, polyalginate-lysine, polyester sulfide, polyvinyl alcohol, polyvinylidene fluoride or polymer containing ionic dissociation groups.

The inorganic solid electrolyte may include, for example, nitrides, halides or sulfates of Li such as Li₃N, LiI, Li₅NI_{2,} Li₃N-LiI-LiOH, LiSiO₄, LiSiO₄-LiI-LiOH, Li₂SiS₃, Li₄SiO₄, Li₄SiO₄-LiI-LiOH or Li₃PO₄-Li₂S-SiS₂.

The electrolyte solution injection may be performed at a proper step of the battery manufacturing process according to the manufacturing process and required properties of the final product. That is, the electrolyte solution injection may be done before battery assembly or at the final stage of battery assembly.

The third aspect of the present disclosure relates to a method for manufacturing a separator.

The method for manufacturing the separator according to an aspect of the present disclosure includes:
preparing the porous polymer substrate;
preparing a slurry for forming the adhesive layer including the first binder polymer and a first aqueous solvent, applying the slurry for forming the adhesive layer to at least one surface of the porous polymer substrate and drying the slurry for forming the adhesive layer to form the adhesive layer; and
preparing a slurry for forming the heat-resistant layer including the inorganic particles, the second binder polymer, a second aqueous solvent and an organic solvent, applying the slurry for forming the heat-resistant layer to one surface of the adhesive layer and drying the slurry for forming the heat-resistant layer to form the heat-resistant layer,
wherein the first binder polymer includes the acrylic polymer, and
wherein the swelling ratio of the acrylic polymer is 50% or more.

After the adhesive layer is formed on one or two surfaces of the porous polymer substrate, the slurry for forming the heat-resistant layer is applied. In this instance, the acrylic polymer included in the adhesive layer may absorb the organic solvent included in the slurry for forming the heat-resistant layer and swell by 50% or more.

In an embodiment of the present disclosure, the organic solvent includes a carbonate-based solvent. For example, the organic solvent may include at least one linear carbonate of dimethyl carbonate, diethyl carbonate, dipropyl carbonate, methylpropyl carbonate, ethylpropyl carbonate or ethylmethyl carbonate; and/or at least one cyclic carbonate of ethylene carbonate, propylene carbonates or butylene carbonate; or a mixture thereof. Preferably, the organic solvent may include dimethyl carbonate.

In an embodiment of the present disclosure, the second aqueous solvent and the organic solvent in the slurry for forming the heat-resistant layer may be mixed at a volume ratio of 95:5 to 80:20, 95:5 to 90:10, or 90:10 to 80:20. When the second aqueous solvent and the organic solvent are mixed in the aforementioned range of amounts, the first binder polymer included in the adhesive layer may sufficiently absorb the organic solvent and swell in the process of applying the slurry for forming the heat-resistant layer to one surface of the adhesive layer.

Hereinafter, the present disclosure will be described in more detail through examples, but the following examples are provided to describe the present disclosure by way of illustration, and the scope of the present disclosure is not limited thereto.

### Example 1

A 9 µm-thick polyethylene film as a porous polymer substrate was prepared.

Polymethyl methacrylate (PMMA) having the degree of crosslinking of 60% as a first binder polymer was added to water to prepare a slurry for forming an adhesive layer having the solid content of 10%, and the slurry was applied to two surfaces of the porous polymer substrate and dried to form an adhesive layer.

Water and dimethyl carbonate were mixed at a volume ratio of 90:10, and Al₂O₃ as inorganic particles and PVDF-HFP as a second binder polymer were added to the mixture to prepare a slurry for forming a heat-resistant layer having the solid content of 35%. Subsequently, the slurry for forming the heat-resistant layer was applied to one surface of the adhesive layer and dried to form a heat-resistant layer, completing the manufacture of a separator. The thickness of the adhesive layer was 0.5 µm, and the thickness of the heat-resistant layer was 1.5 µm when measured.

In this instance, the swelling ratio of the first binder polymer, PMMA, in dimethyl carbonate was 60%.

### Example 2

A separator was manufactured in the same way as Example 1, except that polymethyl methacrylate (PMMA) having the degree of crosslinking of 10% was added as the first binder polymer.

In this instance, the calculated swelling ratio of the first binder polymer was 90%.

### Comparative Example 1

A separator was manufactured in the same way as Example 1, except that the adhesive layer was not formed, the slurry for forming the heat-resistant layer was directly applied to two surfaces of the porous polymer substrate and dried to manufacture the separator.

### Comparative Example 2

A separator was manufactured in the same way as Example 1, except that polyacrylonitrile having the degree of crosslinking of 60% and the swelling ratio of 30% in dimethyl carbonate was used as the first binder polymer.

### Comparative Example 3

A separator was manufactured in the same way as Example 1, except that PVDF-HFP having the degree of crosslinking of 85% and the swelling ratio of 130 % in dimethyl carbonate was used as the first binder polymer.

### Comparative Example 4

A separator was manufactured in the same way as Example 1, except that polyvinylpyrrolidone (PVP) was used as the first binder polymer.

The polyvinylpyrrolidone is a binder polymer produced by solution polymerization, making it impossible to compare the swelling ratio at the equivalent level with the acrylic polymer produced by emulsion polymerization.

### Comparative Example 5

A separator was manufactured in the same way as Example 1, except that polymethyl methacrylate (PMMA) having the degree of crosslinking of 10% was added as the first binder polymer.

In this instance, the calculated swelling ratio of the first binder polymer was 45%.

### Comparative Example 6

A separator was manufactured in the same way as Example 1, except that the slurry for forming the heat-resistant layer was applied to two surfaces of the porous polymer substrate and dried to form the heat-resistant layer, and the slurry for forming the adhesive layer was applied to one surface of the heat-resistant layer and dried to form the adhesive layer. That is, the stacking order of the adhesive layer and the heat-resistant layer was contrary to Example 1.

### Swelling measuring method

In Examples/Comparative Examples, the swelling ratio was calculated by measuring the initial mass (W₀) of the film made of the first binder polymer and the mass (W₁) after the film was put in dimethyl carbonate and stored at 60°C for 48 hours, and substituting them into Equation 1 below.$Swelling ratio \left(%\right) = \left\{\left({W}_{1}-{W}_{0}\right){/ W}_{0}\right\} \times 100$ (Equation 1)

### Crosslinking degree measuring method

In Examples/Comparative Examples, the degree of crosslinking was calculated as a ratio of dry weight to initial weight of the film made of the first binder polymer, wherein the dry weight refers to the remaining weight after boiling for 4 hours in a decalin solution of 135°C in accordance with ASTM D 2765.

### Thickness measuring method

In Examples/Comparative Examples, the thickness of the adhesive layer and the heat-resistant layer was measured using a thickness measurement instrument (Mitutoyo).

### Experimental Example 1: Peel strength measurement

For each of the separators manufactured in Examples and Comparative Examples, peel strength between the porous polymer substrate and the porous coating layer was measured, and TABLE 1 below summarizes the results.

Specifically, each of the separators manufactured in Examples 1 and 2 and Comparative Examples 1 to 4 was tailored to a size of 15 mm X 100 mm. A double-sided adhesive tape was attached to a glass plate and the surface of the porous coating layer of the as-prepared separator was adhered to the adhesive tape. Subsequently, the end of the adhered separator was placed on UTM equipment (LLOYD Instrument LF Plus), and when pulling at 180^{o} at the speed of 300 mm/min, a force required to peel off the porous coating layer from the porous polymer substrate was measured.

**TABLE 1**

| | Presence or absence of adhesive layer | Type of first binder polymer | Swelling ratio of first binder polymer (%) | Peel strength (gf/15mm) |
|---|---|---|---|---|
| Example 1 | ○ | Acrylic | 60% | 109 |
| Example 2 | ○ | Acrylic | 90% | 121 |
| Comparative Example 1 | × | - | - | 32 |
| Comparative Example 2 | ○ | Acrylic | 30% | 45 |
| Comparative Example 3 | ○ | PVDF-based | 30% | 41 |
| Comparative Example 4 | ○ | PVP-based | - | 10 |
| Comparative Example 5 | ○ | Acrylic | 45% | 55 |
| Comparative Example 6 | ○ | Acrylic | 60% | 40 |

Referring to the above TABLE 1, it was confirmed that the separator according to the present disclosure was superior to the separator according to Comparative Example in terms of peel strength.

Specifically, it was confirmed that the separator according to Comparative Example 1 had low peel strength because of the absence of the adhesive layer. In addition, it was confirmed that the separators according to Comparative Examples 2 and 5 included the acrylic polymer, but had low swelling ratio of 30% or 45%, thereby failing to ensure sufficient peel strength.

In the case of Comparative Example 3 including the PVDF-based binder, because the PVDF-based binder polymer is a crystalline polymer, as opposed to the acrylic polymer, it failed to achieve good electrolyte wetting and high swelling ratio, resulting in insufficient peel strength.

In the case of Comparative Example 4 including the PVP-based binder polymer, very low peel strength was observed. Because the PVP-based binder polymer dissolves in the organic solvent, presumably, the PVP-based binder polymer eluted into the dimethyl carbonate contained in the slurry for forming the heat-resistant layer in the process of applying the slurry for forming the heat-resistant layer. Meanwhile, the PVP-based binder polymer is a binder polymer produced by solution polymerization, making it impossible to compare the swelling ratio at the equivalent level with the acrylic polymer produced by emulsion polymerization.

Comparative Example 6 involves forming the heat-resistant layer on two surfaces of the porous polymer substrate and the adhesive layer on the heat-resistant layer, and thus the position of the heat-resistant layer and the adhesive layer is contrary to Example 1. Because the heat-resistant layer was formed earlier than the adhesive layer, the binder polymer of the adhesive layer did not swell sufficiently, thereby failing to ensure sufficient peel strength.

Although the present disclosure has been hereinabove described with respect to certain number of embodiments, the present disclosure is not limited thereto, and it is obvious to persons having ordinary skill in the technical field pertaining to the present disclosure to make various changes and modifications within the technical scope of the present disclosure and the appended claims and their equivalents.

## Claims

1. A separator comprising:
a porous polymer substrate; and a porous coating layer,
wherein the porous coating layer includes an adhesive layer located on at least one surface of the porous polymer substrate; and a heat-resistant layer located on one surface of the adhesive layer,
wherein the adhesive layer includes a first binder polymer,
wherein the heat-resistant layer includes inorganic particles and a second binder polymer,
wherein the first binder polymer includes an acrylic polymer, and
wherein a swelling ratio of the acrylic polymer is 50% or more.

2. The separator according to claim 1,
wherein the swelling ratio of the acrylic polymer is 60% or more.

3. The separator according to claim 1,
wherein the swelling ratio of the acrylic polymer is measured by Equation 1 below: $Swelling ratio \left(%\right) = \left\{\left({W}_{1}-{W}_{0}\right)/{W}_{0}\right\} X 100$ (Equation 1)
wherein in the Equation 1, W₀ denotes an initial mass of a film made of the binder polymer when measured at 25°C, and W₁ denotes a mass of the binder polymer film measured at 25°C after the film has been put in dimethyl carbonate and stored at 60°C for 48 hours.

4. The separator according to claim 3,
wherein the carbonate-based solvent includes the dimethyl carbonate.

5. The separator according to claim 1,
wherein the acrylic polymer is crosslinked and has a degree of crosslinking of 0.01% to 80%.

6. The separator according to claim 1,
wherein the acrylic polymer includes poly(methylmethacrylate), poly(ethylhexyl acrylate), poly(butylacrylate), poly(acrylonitrile), a copolymer of ethylhexyl acrylate and methyl methacrylate, a copolymer of butylacrylate and methyl methacrylate, an ethyl acrylate-acrylic acid-N,N-dimethylacrylamide copolymer, an ethyl acrylate-acrylic acid-2-(dimethylamino)ethyl acrylate copolymer, an ethyl acrylate-acrylic acid-N,N-diethylacrylamide copolymer, an ethyl acrylate-acrylic acid-2-(diethylamino)ethyl acrylate copolymer, or a mixture of two or more thereof.

7. The separator according to claim 1,
wherein a peel strength between the porous polymer substrate and the porous coating layer is 50 gf/15 mm or more.

8. The separator according to claim 1,
wherein the adhesive layer does not include inorganic particles.

9. An electrochemical device comprising:
a positive electrode, a negative electrode and a separator interposed between the positive electrode and the negative electrode,
wherein the separator is the separator according to any one of claims 1 to 8.

10. A method for manufacturing a separator, the method comprising:
preparing a porous polymer substrate;
preparing a slurry for forming an adhesive layer including a first binder polymer and a first aqueous solvent, applying the slurry for forming the adhesive layer to at least one surface of the porous polymer substrate and drying the slurry to form the adhesive layer; and
preparing a slurry for forming a heat-resistant layer including inorganic particles, a second binder polymer, a second aqueous solvent and an organic solvent, applying the slurry for forming the heat-resistant layer to one surface of the adhesive layer and drying the slurry to form the heat-resistant layer,
wherein the first binder polymer includes an acrylic polymer, and
wherein a swelling ratio of the acrylic polymer is 50% or more.

11. The method for manufacturing the separator according to claim 10,
wherein the organic solvent includes a carbonate-based solvent.

12. The method for manufacturing the separator according to claim 10,
wherein the organic solvent includes dimethyl carbonate, diethyl carbonate, dipropyl carbonate, methylpropyl carbonate, ethylpropyl carbonate, and ethylmethyl carbonate or a mixture thereof.

13. The method for manufacturing the separator according to claim 10,
wherein the second aqueous solvent and the organic solvent are mixed at a volume ratio of 95:5 to 80:20.
